# DEMANDE DE BREVET EUROPEEN

(11) **EP 1 276 213 A1**
(43) Date de publication de la demande: **15.01.2003**
(21) Numéro de dépôt: 02291766.0
(22) Date de dépôt: 12.07.2002
(51) Int. Cl.: H02K 21/24

(54) **Machine discoide**

(30) Priorité: 13.07.2001 FR 0109424
(71) Demandeur: Moteurs Leroy Somer, 16000 Angouleme (FR)
(72) Inventeur: Saint Michel, Jacques, 16000 Angouleme (FR); Abou-Akar, Atef, 16340 L'Isle d'Espagnac (FR)
(74) Mandataire: Leszczynski, André

(57) **Abrégé**

La présente invention concerne une machine discoïde comportant un rotor et un stator disposés face à face suivant l'axe de rotation du rotor. La machine est synchrone et comporte au moins deux rotors (20) disposés de part et d'autre d'un stator (10).

## Description

La présente invention concerne les machines électriques et plus particulièrement les machines dites discoïdes, sans balais, comportant un rotor et un stator disposés face à face suivant l'axe de rotation du rotor.

L'invention concerne une machine synchrone qui comporte au moins deux rotors disposés de part et d'autre d'un stator. L'utilisation de deux rotors permet de doubler le couple pour sensiblement la même quantité de fer et de cuivre au stator, ce qui permet d'améliorer très nettement le rendement. Les rotors comprennent des aimants permanents, disposés entre des pièces polaires aptes à concentrer leur flux magnétique.

Le brevet US 5 245 238 décrit une machine connue de ce type. Les bobinages sont distribués.

La machine selon l'invention peut se caractériser par le fait que le stator comporte un circuit magnétique comprenant des dents servant chacune de noyau à une bobine. La fabrication du stator s'en trouve simplifiée et l'encombrement de la machine peut être réduit grâce à l'absence des têtes de bobines rencontrées sur les machines conventionnelles à bobinages distribués.

Dans une réalisation préférée, au moins deux des rotors sont décalés angulairement l'un par rapport à l'autre. Un tel décalage permet de réduire, voire d'éliminer, les pulsations de couple.

En particulier, lorsque le nombre de phases m est pair, au moins deux des rotors peuvent être décalés d'un angle α voisin de π / S, où S = m.p est le nombre de dents stator, p étant le nombre de paires de pôles. Lorsque m est impair, au moins deux des rotors peuvent être décalés d'un angle α voisin de π / 2S.

Le nombre de dents stator S peut également vérifier l'une des relations :
S =2m.n, avec p = m.n ± 1, où n est un entier quelconque, ou encore
S = m (2n + 1), avec 2p = m (2n + 1) ± 1, où n est un entier quelconque.

Notamment lorsque S vérifie l'une de ces deux relations, les deux rotors peuvent ne pas être décalés angulairement.

Dans une réalisation particulière, le stator est dépourvu de culasse magnétique, ce qui permet de réduire encore de manière significative les pertes, notamment aux vitesses élevées. En effet, l'absence de culasse stator entraîne l'annulation des pertes qui auraient existées dans cette culasse et qui sont dues à la variation temporelle de l'induction magnétique. Les bobines et les dents du stator peuvent être logées dans une enveloppe amagnétique. Il en est de même des aimants et des pièces polaires des rotors. Le stator peut comporter des dents présentant des faces en regard planes et parallèles, du moins sur une majeure partie de la longueur des dents.

Les dents du stator peuvent être supportées par deux pièces amagnétiques les reliant à l'enveloppe.

Les pièces polaires des rotors peuvent comporter chacune une surface arrondie faisant face au stator, notamment une surface généralement convexe vers le stator, afin de réduire les harmoniques de la force électromotrice.

Dans une réalisation particulière, le circuit magnétique du stator est réalisé avec un produit à base de poudre de matériau magnétique. Les pièces polaires des rotors peuvent également, le cas échéant, être réalisées au moyen de ce même type de produit, ce qui facilite notamment la réalisation des surfaces arrondies tournées vers le stator.

L'invention s'applique aussi bien à la réalisation d'un moteur que d'une génératrice.

L'invention a ainsi encore pour objet l'utilisation d'une machine telle que définie plus haut comme moteur ou générateur tournant à une vitesse supérieure à 4000 min⁻¹, par exemple.

D'autres caractéristiques et avantages de la présente invention ressortiront à la lecture de la description détaillée qui va suivre, d'un exemple de mise en oeuvre non limitatif, et à l'examen du dessin annexé, sur lequel :
- la figure 1 est une vue schématique et partielle, de côté, d'une machine discoïde réalisée conformément à l'invention,
- la figure 2 représente isolément et partiellement, de façon schématique, en vue de dessus, le stator,
- la figure 3 est une vue de côté du stator de la figure 2,
- la figure 4 représente isolément et partiellement, de façon schématique, en vue de dessus, l'un des rotors, et
- la figure 5 est une vue de côté du rotor de la figure 4.

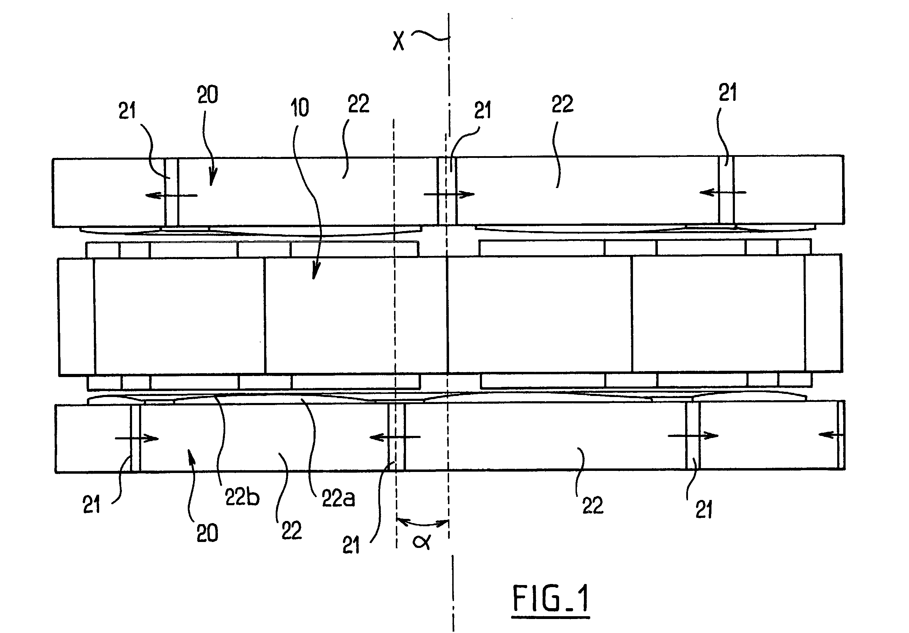

On a représenté sur la figure 1 de manière schématique un moteur synchrone comportant un stator 10 et deux rotors 20 tournant autour d'un axe géométrique X, de part et d'autre du stator 10.

Dans l'exemple de réalisation décrit, les deux rotors 20 sont identiques, étant décalés angulairement l'un par rapport à l'autre, comme cela sera précisé plus loin. Si l'on fait abstraction de ce décalage angulaire, les deux rotors sont disposés symétriquement l'un par rapport à l'autre par rapport à un plan médian du stator 10, perpendiculaire à l'axe X.

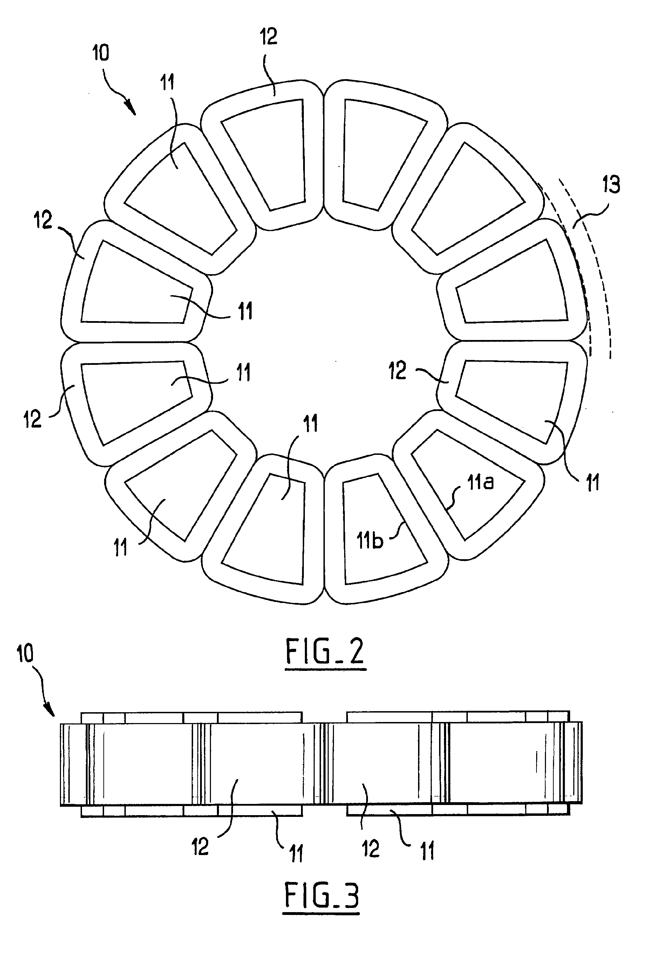

On a représenté isolément sur les figures 2 et 3 le stator 10. Celui-ci comporte une pluralité de dents 11, au nombre de douze dans l'exemple décrit, le moteur étant alimenté en tension ou en courant triphasé et comportant huit pôles. Chaque dent 11 sert de noyau à une bobine individuelle 12.

On remarquera à l'examen de la figure 2 que les dents 11 présentent une section transversale généralement trapézoïdale dans un plan de coupe perpendiculaire à l'axe X, la grande base étant située du côté radialement le plus extérieur. Les dents 11 présentent une section transversale sensiblement constante, au moins sur une majeure partie de leur longueur. Deux dents 11 adjacentes présentent l'une envers l'autre des faces 11a, 11b planes et parallèles, au moins sur une majeure partie de leur longueur.

Chaque bobine 12 peut être bobinée directement sur une dent 11 ou bobinée à part puis être mise en place sur la dent 11 correspondante, et dans ce dernier cas les dents 11 seront dépourvues d'épanouissements polaires. Les dents 11 munies de leurs bobines 12 respectives peuvent être disposées en cercle autour de l'axe X puis insérées à l'intérieur d'une enveloppe amagnétique 13, partiellement représentée en trait discontinu sur la figure 2, dans un souci de clarté du dessin. Cette enveloppe peut servir en particulier comme conduit à un fluide de refroidissement.

La dimension axiale des dents 11 est supérieure à la dimension axiale des bobines 12, comme on le voit sur la figure 3, de telle sorte que les dents 11 présentent des parties faisant saillie par rapport aux bobines 12 et dirigées chacune vers le rotor correspondant 20. Ces parties faisant saillie reçoivent deux pièces amagnétiques non représentées par souci de clarté du dessin, servant de support au stator et le reliant à l'enveloppe 13.

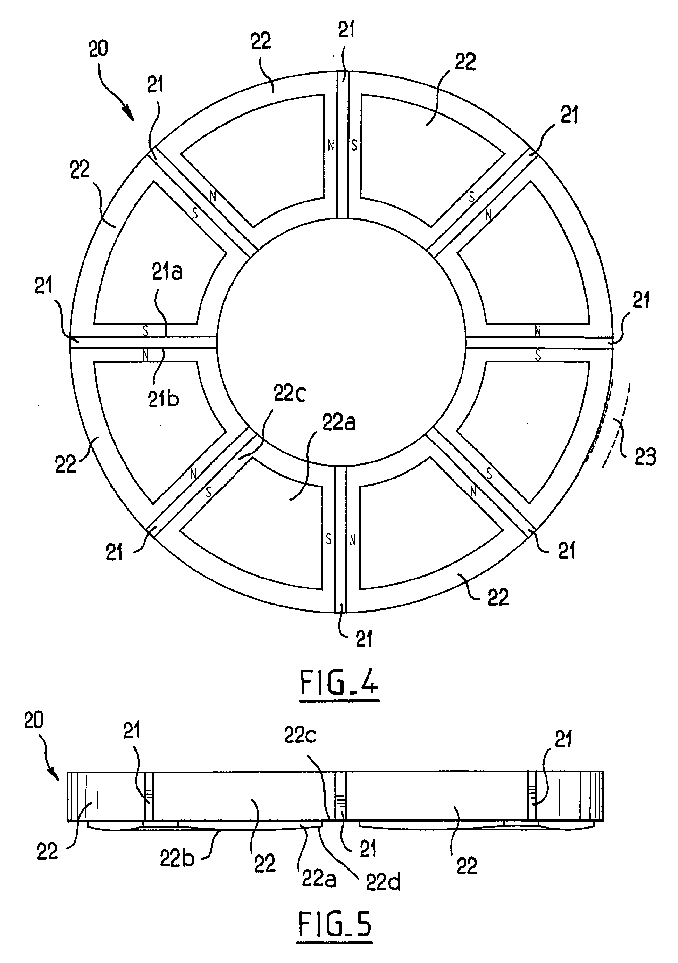

On a représenté sur les figures 4 et 5 un rotor 20. Celui-ci comporte une pluralité d'aimants permanents 21, au nombre de huit dans l'exemple représenté, le moteur étant à huit pôles. Ces aimants 21 sont disposés entre des pièces polaires 22.

Dans l'exemple illustré, chaque aimant 21 présente deux faces polaires 21a et 21b, planes et parallèles, mais on ne sort pas du cadre de la présente invention lorsque les faces polaires 21a et 21b sont non parallèles et convergent vers l'extérieur du rotor, afin d'obtenir un effet de coincement des aimants sous l'effet de la force centrifuge.

Les aimants 21 ont des polarités orientées de telle sorte que les pièces polaires 22 concentrent le flux magnétique, c'est-à-dire que deux aimants 21 adjacents ont des faces de même polarité tournées vers la pièce polaire 22 disposée entre eux.

Les pièces polaires 22 et les aimants 21 peuvent être maintenus par une enveloppe 23 réalisée dans un matériau amagnétique, laquelle n'a été représentée que partiellement en trait discontinu sur la figure 4, dans un souci de clarté du dessin.

Chaque pièce polaire 22 comporte une partie centrales en saillie 22a sur sa face tournée vers le stator 10. Cette partie en saillie 22a présente une surface arrondie 22b, légèrement bombée vers le stator 10, se raccordant à la zone périphérique 22c de la pièce polaire 22 par un décrochement 22d. La forme bombée de la surface 22b permet de réduire les harmoniques de la force électromotrice.

Le champ magnétique quitte la partie en saillie 22a de la pièce polaire 22 pour traverser l'entrefer entre le rotor 20 et le stator 10 et atteindre les dents 11 du stator 10.

On remarquera que l'épaisseur d'une pièce polaire 22, au niveau de la jonction de celle-ci avec les aimants 21 adjacents, est sensiblement la même que celle de ces derniers.

Les dents 11 du stator 10, tout comme les pièces polaires 22 des rotors 20, peuvent être feuilletées, c'est-à-dire réalisées par empilage de tôles magnétiques recouvertes de vernis, de façon à diminuer les pertes par courants induits, ou être réalisées par moulage d'un produit à base de poudre de matériau magnétique.

On a représenté par des flèches sur la figure 1 l'orientation du champ magnétique des aimants 21 des deux rotors 20. On voit sur cette figure 1 que les deux rotors 20 sont décalés angulairement l'un par rapport à l'autre autour de l'axe X d'un angle α, choisi de manière à réduire, voire éliminer, les pulsations de couple. Si m est le nombre de phases, étant par exemple égal à trois comme dans l'exemple décrit, et p le nombre de paires de pôles, le nombre de dents au stator est égal à S = m.p et le nombre de pièces polaires de chaque rotor est égal à R = 2.p.

Pour m pair, la fréquence fondamentale de pulsation f du couple exprimée en Hz est égale à S.N / 60, où N est la vitesse de rotation du moteur en min⁻¹. Il suffit pour éliminer cette pulsation de décaler les rotors d'un angle α = π / S. Pour m impair, la fréquence fondamentale de pulsation f du couple exprimée en Hz est égale à 2.S.N / 60. Il suffit alors pour éliminer cette pulsation de décaler les deux rotors d'un angle α = π / 2S.

Bien entendu, l'invention n'est pas limitée à la réalisation d'un moteur et s'applique également à la réalisation d'un générateur.

Dans l'invention, le flux magnétique peut se refermer à travers deux culasses rotor au lieu d'une culasse stator et d'une culasse rotor, ce qui permet d'augmenter le couple et de diminuer les pertes, notamment aux vitesses élevées, par exemple des vitesses supérieures à 4000 min⁻¹.

L'invention n'est pas limitée à un seul stator et la machine peut comporter plusieurs stators et plus de deux rotors.

## Revendications

1. Machine discoïde synchrone, comportant
- un stator (10),
- au moins deux rotors (20) disposés de part et d'autre du stator (10) suivant l'axe de rotation des rotors, les rotors comprenant :
- des pièces polaires (22),
- des aimants permanents (21) disposés entre les pièces polaires (22), ces dernières étant aptes à concentrer le flux des aimants,
machine **caractérisée par le fait que** le stator comporte un circuit magnétique comprenant des dents (11) servant chacune de noyau à une bobine (12).

2. Machine selon la revendication précédente, **caractérisée par le fait que** le stator comporte des dents (11) présentant des faces en regard (11a, 11b) planes et parallèles, au moins sur une majeure partie de la longueur des dents.

3. Machine selon l'une quelconque des revendications précédentes, **caractérisée par le fait que** le stator comporte des dents dépourvues d'épanouissements polaires.

4. Machine selon l'une quelconque des revendications précédentes, **caractérisée par le fait qu'**au moins deux desdits rotors (20) sont décalés angulairement l'un par rapport à l'autre.

5. Machine selon l'une quelconque des revendications précédentes, **caractérisée par le fait que**, lorsque le nombre de phases m est pair, au moins deux desdits rotors sont décalés d'un angle α voisin de π / S où S = m.p étant le nombre de dents stator, p étant le nombre de paires de pôles, et lorsque m est impair, au moins deux desdits rotors sont décalés d'un angle α voisin de π / 2S.

6. Machine selon l'une quelconque des revendications 1 à 3, **caractérisée par le fait que** S =2m.n, avec p = m.n ± 1, où n est un entier quelconque, m est le nombre de phases, p le nombre de paires de pôles et S le nombre de dents stator.

7. Machine selon l'une quelconque des revendications 1 à 3, **caractérisée par le fait que** S = m (2n + 1), avec 2p = m (2n + 1) ± 1, où n est un entier quelconque, m est le nombre de phases, p le nombre de paires de pôles et S le nombre de dents stator.

8. Machine selon l'une quelconque des revendications précédentes, **caractérisée par le fait que** le stator (10) est dépourvu de culasse magnétique.

9. Machine selon l'une quelconque des revendications précédentes, **caractérisée par le fait que** les pièces polaires (22) présentent une surface arrondie (22b) faisant face au stator.

10. Machine selon la revendication précédente, **caractérisée par le fait que** ladite surface (22b) présente une forme généralement convexe.

11. Machine selon l'une quelconque des revendications précédentes, **caractérisée par le fait que** le circuit magnétique (11) du stator est réalisé avec un produit à base de poudre de matériau magnétique.

12. Machine selon l'une quelconque des revendications précédentes, **caractérisée par le fait que** les pièces polaires (22) des rotors (20) sont réalisées avec un produit à base de poudre de matériau magnétique.

13. Machine selon l'une quelconque des revendications précédentes, **caractérisée par le fait que** les bobines (12) et les dents (11) du stator (10) sont logées dans une enveloppe amagnétique (13).

14. Machine selon la revendication 13, **caractérisée par le fait que** les dents (11) sont supportées par deux pièces amagnétiques les reliant à l'enveloppe (13).

15. Machine selon la revendication 13 ou 14, **caractérisée par le fait que** l'enveloppe sert de conduit à un fluide de refroidissement.

16. Machine selon l'une quelconque des revendications précédentes, **caractérisée par le fait que** les aimants (21) et les pièces polaires (22) sont logés dans une enveloppe amagnétique (23).

17. Machine selon l'une quelconque des revendications précédentes, **caractérisée par le fait que** le stator comporte des dents (11) de section transversale sensiblement trapézoïdale, ayant des faces convergeant radialement vers l'intérieur.

18. Utilisation d'une machine telle que définie dans l'une quelconque des revendications précédentes comme moteur ou générateur tournant à une vitesse supérieure à 4000 min⁻¹.
